# EUROPÄISCHE PATENTSCHRIFT

(11) **EP 0 830 776 B1**
(45) Veröffentlichungstag und Bekanntmachung des Hinweises auf die Patenterteilung: **07.11.2001**
(21) Anmeldenummer: 96919566.8
(22) Anmeldetag: 22.05.1996
(51) Int. Cl.: H04L 29/06

(54) **INTEGRATION VON COMPUTERNETZEN UND KOMMUNIKATIONSNETZEN**
COMPUTER NETWORK AND COMMUNICATION NETWORK INTEGRATION SYSTEM
INTEGRATION DE RESEAUX INFORMATIQUES ET DE RESEAUX DE COMMUNICATION

(30) Priorität: 31.05.1995 DE 19520045
(43) Veröffentlichungstag der Anmeldung: 25.03.1998
(73) Patentinhaber: SIEMENS AKTIENGESELLSCHAFT, 80333 München (DE)
(72) Erfinder: STEIN, Karl-Ulrich, D-82008 Unterhaching (DE); HUSSMANN, Heinrich, D-82327 Tutzing (DE); THEIMER, Thomas, D-81379 München (DE); VON DER STRATEN, Gernot, D-82327 Tutzing (DE)
(86) Internationale Anmeldenummer: DE9600895
(87) Internationale Veröffentlichungsnummer: WO9638962

(56) Entgegenhaltungen:
- EP-A- 0 695 075
- GB-A- 2 283 154
- US-A- 4 996 685
- CONNEXIONS, Bd. 9, Nr. 2, Februar 1995, US, Seiten 12-24, XP000570290 M.HANDLEY ET AL: "THE WORLD-WIDE WEB: HOW SERVERS WORK"

## Beschreibung

Der Erfindung liegt die Aufgabe zugrunde, Wege zu einer Integration von Computernetzen und Kommunikationsnetzen, insbesondere digitalen Breitbandnetzen aufzuzeigen, mit der die Verknüpfung der Vorteile beider Netzwerkarchitekturen ermöglicht wird. Diese Aufgabe wird erfindungsgemäß mit den Merkmalen der Ansprüche 1, 6, 7 und 11 gelöst.

Die vorliegende Erfindung wird u.a. verwirklicht durch einen Netzwerkserver mit einer ersten Schnittstelle zu einem Computernetz und einer zweiten Schnittstelle zu einem Kommunikationsnetz und Mitteln zur Übertragung von auf dem Netzwerkserver gespeicherten, von einem Netzanwender mit Hilfe einer auf dem Computernetz laufenden Anwendung ausgewählten Daten über das Kommunikationsnetz an einen Netzteilnehmer. Hierdurch wird dem Netzanwender die Möglichkeit eröffnet, sich der umfangreichen und komfortablen Navigationsmittel und anderer Vorteile eines Computernetzes zu bedienen und gleichzeitig die Vorteile von Kommunikationsnetzen, z.B. hinsichtlich Datensicherheit und/oder Echtzeitfähigkeit bei der Übertragungen von Daten, z.B. im Multimediabereich, zu nutzen.

Der Begriff "Computernetz" wird im Rahmen dieser Patentanmeldung in Übereinstimmung mit der üblichen Terminologie so verwendet, daß er Netzwerke von Computern wie z.B. das Internet umfaßt, die vor allem durch ihr Netzwerk-Protokoll (z.B. das connection-less network layer protocol, Internet Protocol, u.ä.) und die dezentral organisierte Informationsausbreitung (Routing), also durch die Abwesenheit dedizierter Verbindungen zwischen Netzwerkrechnern charakterisiert sind. Obwohl die physikalischen Verbindungen in diesen Computernetzen zum großen Teil mit Hilfe herkömmlicher, Kommunikationsnetze mit permanenten oder Wählverbindungen realisiert sind, gibt es in Computernetzen wie dem Internet im allgemeinen keine Verbindungen zwischen den Knoten solcher Netze. Die Information wird stattdessen in Form von Paketen vermittelt ("geroutet"), deren tatsächlicher Ausbreitungsweg im allgemeinen nicht vorhersehbar ist, da er von Eigenschaften einer Vielzahl von Zwischenrechnern abhängt, die vom Sender i.a. nicht beeinflußt werden können. Es gibt auch keinen eigentlichen Betreiber solcher Computernetze, der die Funktion dieser Netze gewährleisten oder ihre Verfügbarkeit beeinflussen oder gar die Realisierbarkeit von Übertragungen mit bestimmten Datenraten garantieren könnte.

Der Begriff "Kommunikationsnetz" wird im Rahmen dieser Patentanmeldung so verwendet, daß er analoge und digitale Kommunikationsnetze jeder Art einschließt, wobei diese Kommunikationsnetze nicht speziell für die Vernetzung von Computern sondern für andere Formen der Telekommunikation ausgelegt sind, wie die Übertragung von z.B. Sprache, Ton, Video, u.s.w., aber auch von Daten zwischen speziellen Kommunikationsendgräten, wie z.B. Telefon, Bildtelefon, Fax, digitalen Fernsehgeräten, Computern, etc. Wichtige Beispiele solcher Kommunikationsnetze sind das analoge Telefonnetz, das ISDN, das Kabel-Fernsehnetzwerk oder ein Breitband-Kommunikationsnetz (B-ISDN), z.B. mit ATM-Technologie. Kommunikationsnetze im Sinne dieser Patentanmeldung zeichnen sich gegenüber Computernetzen durch ihre hohe und garantierte Verfügbarkeit, das Vorhandensein von (wenigstens virtuellen) Verbindungen und in der Konsequenz durch ihre Eignung für die Übertragung (großer) Datenmengen in Echtzeit aus.

Computernetze und Kommunikationsnetze im Sinne dieser Patentanmeldung unterscheiden sich daher in erster Linie durch die verwendeten Protokolle - nicht verbindungsorientiert bzw. verbindungsorientiert - und nicht unbedingt durch die physikalischen Verbindungen (Leitungen), die in vielen Fällen gleichartig sein können. Ein Netzwerkserver mit Schnittstellen zu zwei Netzen im Sinne dieser Anmeldung muß daher nicht notwendig an zwei Netze mit physikalisch verschiedenen Verbindungsleitungen angeschlossen sein, da die beiden Schnittstellen auch durch zwei unterschiedliche Protokolle verwirklicht sein können, die unterschiedliche (logische) Netzwerke auf einer einheitlichen physikalischen Basis repräsentieren. Ferner muß ein Netzwerkserver im Sinne dieser Anmeldung nicht unbedingt ein einziger Server sein, auf welchem beide Protokolle laufen; es kann sich auch um einen Verbund von Rechnern handeln, von denen einige über eine Schnittstelle zu einem Computernetz im Sinne dieser Anmeldung, andere wiederum über eine Schnittstelle zu einem Kommunikationsnetz im Sinne dieser Anmeldung verfügen, eine dritte Gruppe von Rechnern möglicherweise über beides. Diese Rechner können untereinander auf viele denkbare, dem Fachmann bekannte Weisen verbunden sein, so daß sie möglicherweise dem Anwender wie ein einziger Server erscheinen.

Vorteilhafte Weiterbildungen und weitere Ausführungsformen der Erfindung ergeben sich aus den Unteransprüchen.

Im folgenden wird die Erfindung anhand bevorzugter Ausführungsbeispiele und mit Hilfe der Figuren näher beschrieben.

Figur 1 zeigt in schematischer Weise den Zugang eines B-ISDN-Teilnehmers'zum Internet über ein entsprechendes Gateway. Hierbei bedeuten die Bezugszeichen
(1): TCP/IP über ATM switched virtual connections (SVC);
(2): TCP/IP über verschiedene physikalische Medien.

Figur 2 zeigt in schematischer Weise das Prinzip eines Protokoll-Stacks für einen transparenten Internet-Zugang über das B-ISDN.

Figur 3 zeigt in schematischer Weise das Prinzip eines Protokoll-Stacks für einen dienstspezifischen Internet-Gateway.

Figur 4 zeigt in schematischer Weise den Betrieb eines lokalen Hochgeschwindigkeitsservers mit Cache durch einen Internet Service Provider für B-ISDN-Teilnehmer. Hierbei bedeuten die Bezugszeichen
(1): TCP/IP über ATM Switched Virtual Connections (SVC);
(2): TPC/IP über Hochgeschwindigkeits-Local Area Networks, z. B. ATM über permanente virtuelle Verbindungen (PVC) ;
(3), (4): TCP/IP über verschiedene physikalische Träger.

Figur 5 zeigt in schematischer Weise einen Betrieb eines Internet-Servers mit einer Schnittstelle zum B-ISDN als Echtzeit-Multimedia-Server.

Figur 6 zeigt in schematischer Weise den Informationsfluß beim Abruf einer Echtzeit-Video-Information.

Figur 7 zeigt in schematischer Weise eine Realisierung von Video on Demand mit Internet-basierter Informationsvermittlung.

Figur 8 zeigt in schematischer Weise den Informationsfluß bei Video on Demand gemäß Figur 7.

Das Internet hat sich von seinen Anfängen als akademisches Forschungsnetz zu einer allgegenwärtigen Kommunikationsinfrastruktur für private, wissenschaftliche und auch geschäftliche Anwender entwickelt. Zur Zeit haben mehr als 30 Millionen Anwender Zugang zum Internet, und ihre Zahl wächst immer schneller. Die im Internet verfügbaren Dienste reichen von einfachen Arten der Kommunikation wie z.B. Remote Login, Electronic Mail über fortgeschrittenere Dienste wie Gopher und das World Wide Web bis hin zu kommerziellen Angeboten des Einzelhandels oder der Informationsvermittlung. Daher wird im Internet von vielen ein erster Schritt zur Realisierung des Information Super-Highway gesehen.

Trotz dieses offensichtlichen Erfolges unterliegt die Nutzung des Internet verschiedenartigen Einschränkungen. Überlastungen von Übertragungsleitungen und Servern machen den Online-Zugang zu Multimedia-Informationen während der üblichen Geschäftszeiten häufig unmöglich. Das hängt hauptsächlich mit dem explosionsartigen Wachstum der Verkehrslasten seit der Einführung des World Wide Web (WWW) zusammen. Eine zweite Ursache ist in dem verwendeten Netzwerk-Protokoll zu sehen, welches nicht für die Echtzeit-Kommunikation konzipiert wurde. Im Internet wird ein verbindungsloses Netzwerkprotokoll, das sogenannte connection-less network layer protocol (Internet Protocol, IP) verwendet, das keinerlei Garantien hinsichtlich der Übertragung oder Zustellung von Datenpakten ermöglicht. Ferner gibt es vielfache Zweifel an der Sicherheit und Zuverlässigkeit des Internet. Es gibt keinen verantwortlichen Betreiber; stattdessen werden die Netzwerkknoten und Server von einer Vielzahl unterschiedlicher Organisationen betrieben, die Zugriff auf alle Daten haben, welche den von ihnen betriebenen Teil des Netzes passieren. Angesichts dieser Situation sind - in der Regel aufwendige und umständliche - Kryptographieverfahren (PGP, RSA, etc.) das einzige Mittel zur Gewährleistung von Datensicherheit und informationeller Selbstbestimmung bei der Benutzung des Internet.

Das Breitband-ISDN ist auf der anderen Seite ein in der Entstehung begriffenes Netzwerk, welches zur Untersützung aller Arten von Kommunikationsdiensten konzipiert wurde. Von Anfang an wurden dabei die Anforderungen des Echtzeitdatenverkehrs berücksichtigt, und dies schlug sich auch in den entsprechenden Standards nieder. Deshalb ist das Breitband-ISDN (B-ISDN) in besonderer Weise zur Übertragung von Multimedia-Informationen, wie z.B. Audio- oder Videoinformationen, in Echtzeit geeignet. Jüngere Entwicklungen im Bereich der ATM Access Networks werden den Zugang zum Breitband-ISDN auch privaten Haushalten und kleineren Unternehmen ermöglichen, wobei eine existierende Infrastruktur, wie z.B. das Kabel-fernsehnetzwerk, verwendet werden wird. Die Technologie des ATM wird bereits für Computernetze, z.B. für die Internet Backbone Links eingesetzt. Die Internet Engineering Community hat bereits stabile Vorschläge zur Implementierung des augenblicklichen Internet-Protokolls und der Dienste auf der Grundlage einer ATM-Infrastruktur vorgelegt [RFC 1577, RFC 1755]. Die Möglichkeiten zur Verbesserung von Internet-Diensten durch Verwendung von Möglichkeiten des B-ISDN sind jedoch noch nicht diskutiert worden.

Diese Patentanmeldung beschreibt eine Anzahl von Szenarios, in welchen das Internet und das Breitband-ISDN (B-ISDN) in verhältnismäßig kurzer Zeit zusammengeführt werden können. In diesen Szenarios können Synergien zwischen beiden Netzwerktechnologien ausgeschöpft werden. Insbesondere kann die exzellente Connectivity des Internet mit den Performance- und Echtzeitfähigkeiten des Breitband-ISDN vorteilhaft kombiniert werden.

In dieser Patentanmeldung werden mögliche Szenarien einer Integration von Computernetzen und Kommunikationsnetzen, also z.B. einer Verbindung des Internet mit dem Breitband-ISDN, beschrieben, wobei von einer ziemlich grundlegenden Lösung ausgehend zunehmend komplexe Konzepte entwickelt werden. Dabei werden für alle Szenarien grundlegende Eigenschaften einer Netzwerkarchitektur angegeben und die Möglichkeiten für weitere Verbesserungen werden erörtert.

### Internet-Grundzugang für B-ISDN-Anwender

Internet Service Provider, wie z.B. America Online, CompuServe und Prodigy bieten privaten Anwendern einen Zugang zum Internet auf kommerzieller Basis. Augenblicklich wird vorwiegend das Telefonnetz (POTS oder ISDN) zur Verbindungsaufnahme mit einem vom ausgewählten Provider betriebenen Internet Gateway benutzt. Die Deutsche Telekom wird demnächst einen Internet-Zugang über ihr Datex-J-Netzwerk ermöglichen. In Abhängigkeit von dem verwendeten Modem und von der Qualität der Telefonleitung werden Datenübertragungsraten von einigen 10 KBit/s bis zu 64 KBit/s mit momentan verfügbaren Technologien möglich sein.

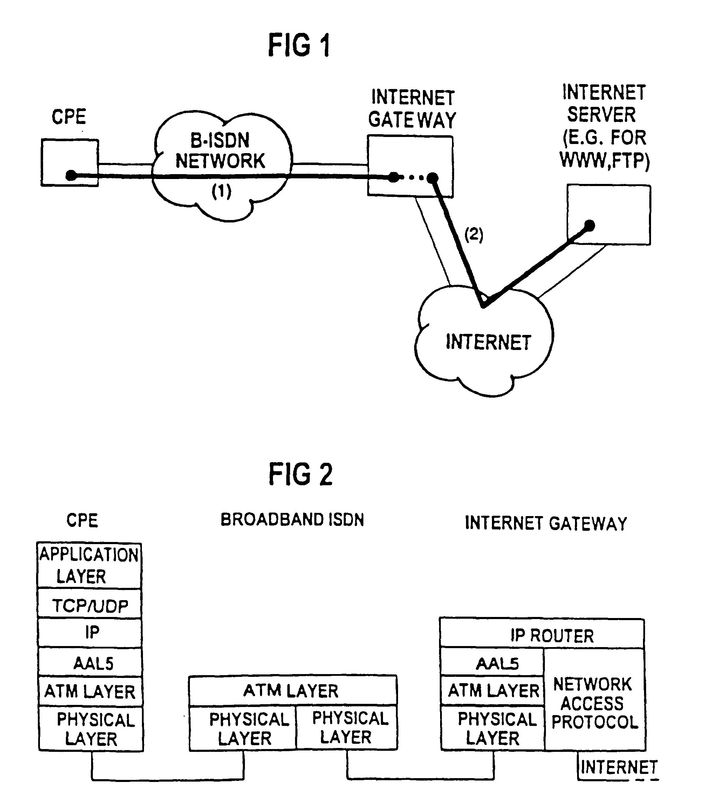

In der nicht zu fernen Zukunft werden auch Privatleute an das Breitband-ISDN über Zugangsnetze angeschlossen sein, welche ATM bis zum Kundenendgerät unterstützen. Typische Beispiele für solche Kundenendgeräte (CPE) sind PC's oder Workstations, die mit einer ATM-Schnittstellenkarte ausgerüstet sind. Wie in FIG 1 gezeigt, werden B-ISDN-Anwender in der Lage sein, das Internet über eine switched virtual connection zu erreichen, was den Vorteil einer extrem zuverlässigen Verbindung mit potentiell sehr viel höheren Datenraten im Vergleich zu heutigen Internet-Zugängen bringt. Trotz alledem wird ein Hochgeschwindigkeitszugang zum Internet allein die Qualität der vom Anwender genützten Dienste nur teilweise verbessern. Sowohl das Internet-Gateway als auch die Backbone Links müßten diese höhere Leistungsfähigkeit gleichermaßen unterstützen. Doch auch dann gäbe es keine Garantie zur Erfüllung von Echtzeitbedingungen, solange wie das Internet-Protokoll verwendet wird.

Der transparente Internet-Zugang auf der Internet-Protokollebene hat den Vorteil der vollständigen Diensteunabhängigkeit, d.h. der Anwender hat vollen Zugang zu allen existierenden und zukünftigen Diensten, die auf dem Internet zur Verfügung gestellt werden. Für die Übertragung von Anwenderdaten ist das Internet-Gateway in diesem Fall gleichwertig zu einem IP-Router. Auf diese Weise wird das Internet eventuell bis zum Kundenendgerät (CPE) ausgedehnt und aus diesem Grunde braucht der Anwender eine globale IP- Adresse. Solange, wie nicht eine nächste IP-Generation eingeführt wird, werden globale IP-Adressen allmählich zu einer knappen Ressource, da der Raum möglicher IP-Adressen insgesamt begrenzt ist.

Um auf das Internet zuzugreifen, muß der Benutzer eine switched virtual connection zum Internet-Gateway etablieren. Nach Abschluß einer Authorisierungsprozedur ist der IP-Router so konfiguriert, daß die IP-Adresse des Anwenders mit der momentanen virtuellen Verbindung assoziiert ist.

Das hierarchische Adressierungsschema des Internet-Protokolls erfordert, daß die Adresse des Anwenders innerhalb der Domäne des Internet-Service-Providers liegt. Um Internet-Adressen nicht in unnötig großer Zahl vergeben zu müssen, sieht die Erfindung hier die dynamische Zuweisung von IP-Adressen an Anwender vor, sobald diese eine Verbindung mit einem Gateway etablieren, wodurch die Gesamtzahl nötiger IP-Adressen reduziert wird.

FIG 2 zeigt Protocol Stacks für einen transparenten Internet-Zugang über das Breitband-ISDN. IP-Pakete werden dabei an das Gateway direkt als AAL5-Protokolldateneinheit ohne jede weitere Kapselung übertragen. Alternativ dazu könnte auch eine Multi-Protokoll-Kapselung gemäß RFC 1483 eingesetzt werden. Dabei ist der IP-Router mit dem Internet über irgendein geeignetes Netzwerkzugangsprotokoll verbunden.

Ein dienstespezifisches Internet-Gateway erlaubt nur den Zugang zu bestimmten Applikationen (Diensten). So können z.B. die möglichen Applikationen eines Zugangs auf den File-Transfer (FTP) und das World-Wide Web (WWW) beschränkt sein. Um sicherzustellen, daß nur authorisierte Applikationen benutzt werden, muß das Gateway Zugriff auf applikationsspezifische Informationen haben. Folglich muß der gesamte Protocol Stack einschließlich einiger Funktionen der Applikationsschicht (Application Layer) von dem Gateway verarbeitet werden.

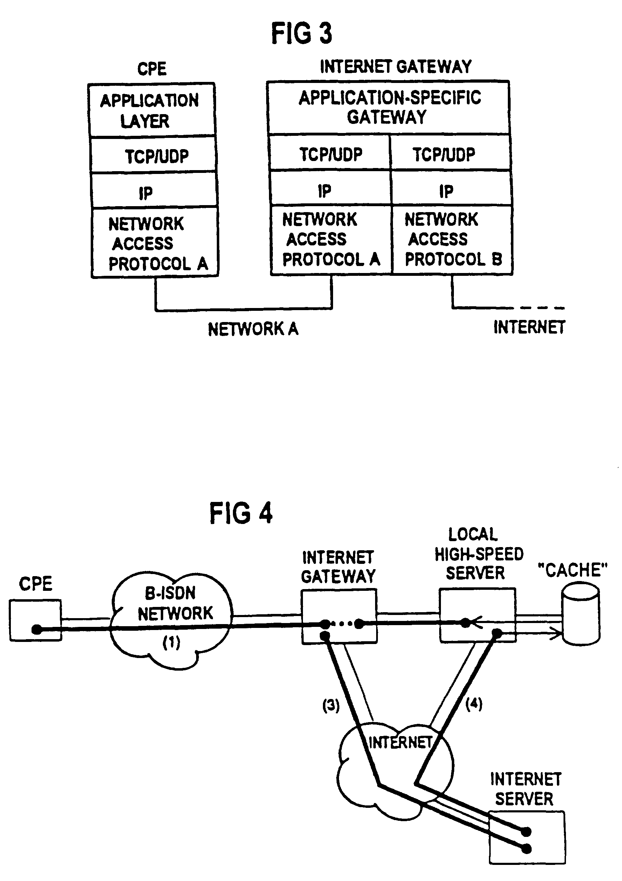

FIG 3 zeigt eine generische Darstellung des Protocol Stacks eines anwendungsspezifischen Internet-Gateway. Dabei wird angenommen, daß zwischen dem Kommunikationsendgerät und dem Gateway eines der Protokolle TCP/IP oder UDP/IP verwendet wird. Im Prinzip könnten auch zwar andere Protokolle gleichermaßen gut verwendet werden; aber auf der Internet-Seite muß eines dieser beiden Protokolle verwendet werden. Für B-ISDN-Anwender ist das Netzwerkzugangsprotokoll zwischen dem Kommunikationsendgerät und dem Gateway ATM-basiert und hat die gleichen Schichten wie sie in FIG 2 dargestellt sind (IP über AAL5).

Das Demultiplexen von Paketen basiert dabei auf der Destination Port Number im TCP (UDP)-Header. Ankommende Port Numbers auf der Internet-Seite werden vom Gateway der entsprechenden Verbindung auf der Seite des Kommunikationsendgeräts zugeordnet. So sind globale IP-Adressen nicht länger erforderlich, um ein Kommunikationsendgerät mit einem Gateway zu verbinden.

### Hochgeschwindigkeits-Internetdienste für B-ISDN-Anwender

Mit der Einführung des B-ISDN ist die Zugangsbitrate (2 MBit/s oder mehr) nicht länger wesentlich niedriger als die Bitrate auf den Verbindungen im Backbone Netzwerk des Internet, die momentan im Bereich zwischen 2 MB/s und 45 MBit/s liegen. Deshalb wird das Internet in Zukunft, besonders wenn viele Benutzer mit Hochgeschwindigkeitszugängen auf das Internet zugreifen, noch mehr überlastet seien als heute und die Antwortzeiten werden sich erheblich verlängern. Die Abfrage und Übertragung von großen Multimedia-Datenmengen durch das Internet wird dadurch fast unmöglich werden.

Für einen Internet-Service-Provider, der sich an B-ISDN-Anwender wendet, ist es andererseits von grundlegender Bedeutung seinen Anwendern hochqualitative Dienste anbieten zu können. Eine Möglichkeit, die beschriebene Situation zu verbessern, besteht darin, einen sehr leistungsfähigen lokalen Server mit dem Internet-Gateway mit Hilfe einer lokalen Hochgeschwindigkeitsverbindung zu verbinden. Dieser Server speichert dann lokal Teile der Information, welche im Internet verfügbar ist, insbesondere speicherintensive Multimedia-Daten. Während der Zugriff auf diese Informationen im Internet sehr langsam sein mag, können die Anwender eines derart ausgerüsteten B-ISDN-Internet-Service-Providers auf diese Informationen dennoch schnell zugreifen.

FIG 4 zeigt eine mögliche Konfiguration gemäß der vorliegenden Erfindung für einen Internet-Service-Provider, der einen B-ISDN-Zugang zum Internet anbietet. Hierbei bedeuten die Bezugszeichen
(1): TCP/IP über ATM Switched Virtual Connections (SVC);
(2): TPC/IP über Hochgeschwindigkeits-Local Area Networks, z. B. ATM über permanente virtuelle Verbindungen (PVC);
(3), (4): TCP/IP über verschiedene physikalische Träger.

Leistungsverbesserungen können dabei für Anwender in drei Stufen eingeführt werden:
1. Der lokale Server hält einfach Kopien häufig benutzter speicherintensiver Archive und Multimedia-Daten in ähnlicher Weise wie ein sogenannter Mirror-Server. Zusätzlich wäre natürlich die Möglichkeit für einen solchen Internet-Service-Provider gegeben, weitere Daten, z.B. hochqualitative Audio- und Videodaten, auf diesem lokalen Server zu halten. Dabei wären keine speziellen Steuerfunktionen oder eine spezielle Software zum Betrieb dieses Servers erforderlich, weil dieser sich wie jeder andere Server auf dem Internet verhält. Daraus folgt aber, daß die Anwender von diesem Server unterrichtet sein müssen und diesen Server explizit adressieren müssen, um in den Genuß der mit dem Betrieb dieses Servers verbundenen Leistungsverbesserungen kommen zu können.
2. In einem zweiten Schritt kann dann das dynamische Caching von Daten eingeführt werden, auf welche erst kürzlich zugegriffen wurde. Das Gateway transferiert dabei eine Kopie der benötigten Daten (z.B. Dateien eines populären FTP-Archives oder häufig abgefragte WWW-Seiten) auf seinen lokalen Cache-Server. Wird diese spezielle Information später wiederholt abgefragt, wird diese Anfrage an den lokalen Cache-Server umgeleitet und kann sofort mit hervorragender Leistungsfähigkeit beantwortet werden. Ein ähnliches Konzept wird bereits bei sogenannten WWW-Proxy-Servern [Bern95] verwendet. Bei diesen muß das Gateway allerdings die nachgefragte Information kennen. Es muß wenigstens seine präzise Lokalisierung im Netzwerk einschließlich der Server-Adresse und der Verzeichnisinformation bekannt sein. Aus diesem Grunde ist eine applikationsspezifische Gateway-Architektur eine notwendige Voraussetzung für dieses Konzept.
3. Der lokale Cache-Server kann mit anderen Internet-Servern über ein Hochgeschwindigkeits-Backbone-Network, wie z.B. das B-ISDN, verbunden werden. Auf diese Weise können auch Daten, die lokal nicht verfügbar sind, von speziellen Servern mit hohen Datenraten über das Backbone-Netzwerk heruntergeladen werden. Für die Anwender ist dieser Vorgang transparent und er erlaubt ihnen einen schnellen Zugriff auf beliebige Server innerhalb des Backbone-Netzwerks, ohne daß dabei die Protocol Stacks in den Endgeräten berührt werden. Diese Lösung befreit auch das Internet selbst von einer beträchtlichen Menge an Datenverkehr, besonders dann, wenn sie mit dem oben beschriebenen dynamischen Cacheing kombiniert wird.

### Echtzeit-Multimedia für WWW mit Hilfe von B-ISDN

Der meist genutzte und populärste Dienst auf dem Internet ist das World-Wide Web (WWW). Das WWW basiert auf der einfachen Dokumentenbeschreibungssprache HTML (Hypertext Markup Language). Information wird auf einem WWW-Server in Form von HTML-Dateien gespeichert, welche mit Hilfe einer Client-Software, auch als Browser bezeichnet (z.B. Mosaic oder Netscape), abgefragt und angesehen werden können. WWW ist ein Hypertext-System; der Anwender kann im World-Wide Web, d.h. zwischen verschiedenen WWW-Dateien, navigieren, indem er auf ein Wort oder eine Wortfolge in einem angezeigten Text oder im Bereich eines angezeigten Bildes klickt. WWW ist auch ein Multimedia-System, da es eine offene Architektur hat, welche Software zur Betrachtung verschiedener Bild-, Video- und Audiodateiformate integriert. Das herausragendste Merkmal des WWW ist die Möglichkeit zur Abfrage von HTML-Dateien von jedem beliebigen WWW-Server über das Internet mit Hilfe eines TCP/IP-basierten Protokolls mit dem Namen HTTP (Hypertext Transport Protocol) [Bern95].

Eine grundlegende Beschränkung des WWW als TCP/IP-basiertes System besteht in der Unmöglichkeit, bestimmte Antwortzeiten für die Übertragung von Informationen zu garantieren. Hierdurch wird die Integration von Echtzeit-Multimedia in das World-Wide Web praktisch verhindert. Echtzeit-Multimedia bedeutet hierbei die Online-Wiedergabe von Video- oder Audioinformationen mit derselben Geschwindigkeit wie sie von der Quelle produziert wird, wobei eine kleine konstante Zeitverzögerung unerheblich ist. Die vorliegende Erfindung ermöglicht nun die Erweiterung des Internet World-Wide Web um Echtzeit-Multimedia-Dienste auf der Grundlage von Breitband-ISDN-Netzwerken.

Für den Anwender macht sich diese Echtzeitverbesserung zunächst in einer erheblich verbesserten Leistung beim Zugriff auf hochqualitative Video- oder Audioinformationen von entfernten Quellen bemerkbar. Insbesondere ist die sofortige Wiedergabe derartiger Informationen direkt nach ihrer Auswahl möglich, ohne auf Dateiübertragungen zu warten.

Des weiteren wird durch Echtzeit-Multimedia eine neue Art von "Live"-Diensten im WWW ermöglicht. Echtzeit-Video- oder -audioinformation kann dem World-Wide Web mit Hilfe eines beliebigen externen Gerätes in Verbindung mit einer Online-Kompressions-Hardware zugeführt werden. Auf der Grundlage dieser Technologie können Server z.B. den Online-Blick durch eine Videokamera ermöglichen. Anwendungen hierfür sind vielfältig: Wetterberichte, touristische Werbung, Sportnachrichten oder sogar der Zugriff auf Fernsehprogramme. Gemäß einer bevorzugten Ausführungsform der vorliegenden Erfindung wird ein World-Wide Web-Server mit einem Breitband-ISDN-Netzwerk verbunden, über welches dieser Server Multimediainformationen in Echtzeit übertragen kann. Mit Hilfe einer weiteren Schnittstelle wird für den Server eine Internet-Verbindung eingerichtet, welche natürlich auch über das Breitband-ISDN-Netzwerk realisiert werden kann. Hierbei wird angenommen, daß der Server die sogenannte Switched Virtual Circuits (SVC)-Technik unterstützt. Die Erfindung geht von dem grundlegenden Gedanken aus, daß das Kundenendgerät über eine SVC-Verbindung mit dem Server verbunden ist, so daß die Information in Echtzeit an das Endgerät übertragen werden kann.

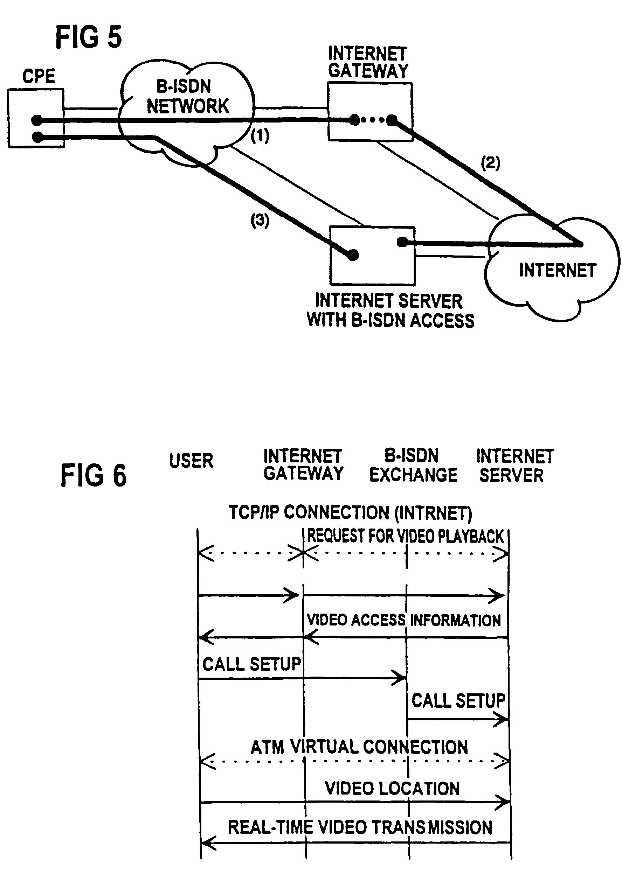

Hierbei ist es notwendig, daß das Kundenendgerät über eine Einrichtung zur Decodierung komprimierter Audio- bzw. Videodaten verfügt. Ein zweckmäßiges Endgerät wäre ein Multimedia-PC mit einer MPEG-Decoderkarte oder eine Workstation mit einem entsprechenden Software-Decoder. FIG 5 zeigt eine Basiskonfiguration gemäß der vorliegenden Erfindung. Dabei bedeuten die Bezugszeichen
(1): TCP/IP über ATM-SVC
(2): TCP/IP über verschiedene physikalische Träger
(3): Nicht-TCP-Verkehr über ATM-SVC

Der Grundgedanke bei der Realisierung der vorliegenden Erfindung entsprechend einer bevorzugten Ausführungsform ist der folgende:

Es wird ein neuer Dateityp für den Zugriff auf Multimedia-Daten in Echtzeit definiert. Eine derartige Datei enthält im wesentlichen die Breitband-ISDN-Adresse eines Anschlusses (Port) des Servers und einige weitere Informationen, welche die Abfrage der entsprechenden Quelle unterstützen. Diese Datei enthält noch nicht die eigentliche Multimedia-Information. Aktiviert nun ein Benutzer einen Link zu einer in Echtzeit zu übertragenden Multimedia-Information, wird lediglich diese kleine Datei zum WWW-Client übertragen.

WWW-Browser können leicht um entsprechende Software-Erweiterungen (sogenannte Viewer) für derartige neue Dateitypen erweitert werden, im wesentlichen durch Hinzufügen eines entsprechenden Viewers, also einer Software-Erweiterung in einem hierfür vorgesehenen Dialog. Solch ein Viewer für Echtzeitvideodateien wird dem Browser auf der Client-Seite hinzugefügt. Der Browser führt nun die Datei aus, indem er eine direkte Breitband-ISDN-Verbindung zum Server eröffnet. Der Datenstrom, welcher nun vom Server über die Breitband-Verbindung zum Endgerät übertragen wird, wird mit Hilfe der hierfür vorhandenen Einrichtungen decodiert und in einem separaten Fenster wiedergegeben.

Es ist wichtig, darauf hinzuweisen, daß Software-Erweiterungen hierbei lediglich auf dem entsprechend ausgerüsteten Internet-Server und auf der Seite des WWW-Clients erforderlich sind. Das Internet selbst oder das Breitband-ISDN-Netz müssen zur Realisierung der Erfindung nicht modifiziert werden.

FIG 6 zeigt die grundlegenden Informationsflüsse bei der Abfrage eines Videoclip mit Hilfe des World-Wide Web in Echtzeit. Einer der wichtigsten Vorteile des Internet ist seine Konnektivität und die gigantischen Informationsmengen und Dienste, zu welchen es Zugang gewährt. Momentan wird das Internet sowohl zur Auffindung von Information (Navigation) als auch zur Abfrage dieser Information und zur Übertragung von Daten (Inhaltsübertragung) genutzt. Sowie mehr und mehr Internet-Server über ein Breitband-ISDN-Netz zugänglich sein werden, sollte die Datenübertragung und Abfrage so weit wie möglich über das Breitband-ISDN ablaufen, um das Internet hierdurch nicht zu belasten und für Navigation und grundlegende Dienste freizuhalten.

Einige Funktionen, die dieses Konzept unterstützen, sind auch schon in der Spezifikation des HTTP enthalten. Der Content Negotiation Algorithmus des HTTP [Bern95] erlaubt die Auswahl eines Dateityps in Abhängigkeit von der Dateigröße neben weiteren Kriterien. Dies würde es dem Anwender erlauben, eine maximale Dateigröße zu definieren, welche er über Internet empfangen will. Alle größeren Dateien würden dann automatisch über das Breitband-ISDN übertragen, wobei die oben beschriebene erfindungsgemäße Methode verwendet würde.

Video on Demand mit einer auf dem Internet basierenden Broker-Funktion

Ein Video on Demand-Dienst, welcher über ein Breitband-ISDN-Netzwerk übertragen wird, kann auch mit einem Internet-Zugang verbunden werden. Bei dieser Variante der vorliegenden Erfindung benutzt der Kunde eine sogenannte Set-Top-Box, welche an ein herkömmliches Fernsehgerät angeschlossen ist, und einen PC, welcher z.B. über Breitband-ISDN oder anders an das Internet angeschlossen ist. Der PC kann sich dabei z.B. in einem heimischen Büroarbeitsplatz, die Set-Top-Box in dem Wohnzimmer befinden. Die Set-Top-Box ist natürlich an ein Breitband-ISDN-Netzwerk angeschlossen. Der Netzwerkabschluß des Breitband-ISDN-Netzwerkes kann für PC und für die Set-Top-Box der gleiche sein.

Unter diesen Voraussetzungen können Anbieter von Video on Demand-Diensten (VOD) im Internet inserieren, wobei besondere WWW-Server die Rolle eines Brokers für Video on Demand-Dienste übernehmen. Der eigentliche Videoserver des VOD-Service Providers ist an das B-ISDN-Netzwerk angeschlossen. Eine Verbindung dieses Videoservers mit dem Internet ist nur optional vorgesehen.

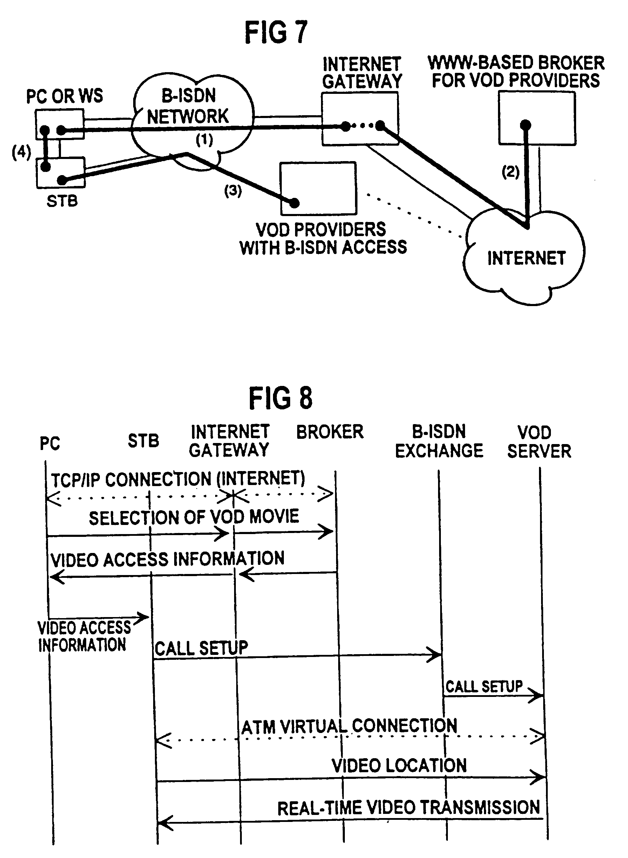

FIG 7 zeigt diese Konfiguration. Dabei bedeuten die Bezugszeichen
(1): TCP/IP über ATM-SVC
(2): TCP/IP über verschiedene physikalische Medien
(3): Nicht-TCP/IP-Verkehr über ATM-SVC
(4): Eine lokale Verbindung, alternativ auch ein ATM-SVC über B-ISDN.

Ein besonderer Vorteil der in FIG 7 gezeigten Lösung ist, daß der PC mit seiner mächtigen Benutzeroberfläche und der Internet-Infrastruktur zur Navigation durch alle angebotenen Videodienste und Video on Demand-Service Provider verwendet werden kann. Das bedeutet, daß ein Spielfilm mit Hilfe des PC z.B. im heimischen Büro eines Anwenders ausgewählt werden kann und mit Hilfe der Set-Top-Box im Wohnzimmer angesehen werden kann. Hierbei ist es natürlich erforderlich, daß der PC die entsprechende Information über die Verbindung (4) bezüglich der ausgewählten Spielfilme an die Set-Top-Box überträgt.

Das World-Wide Web des Internet ist besonders gut zur Speicherung eines ganzen Netzwerkes von gegenseitigen Verweisen zu anderen Informationsquellen geeignet. Dies wird sich besonders in zukünftigen Situationen als vorteilhaft erweisen, wenn Video on Demand ein allgegenwärtiger und durchgängig verfügbarer Dienst für standardisierte Benutzerendgeräte darstellt. Aber schon für die Benutzung der Dienste eines einzelnen Video on Demand-Providers ist das WWW-Interface auf einem PC nützlich. So ist z.B. der Bildschirm eines PC für das Lesen von Textinformation, wie z.B. Spielfilmbeschreibungen, besser geeignet als ein Fernsehgerät und der PC verfügt über lokale Broker. Auf der anderen Seite ist ein Fernsehbildschirm für die Betrachtung von Videosequenzen auf Dauer besser geeignet als ein PC. Höherentwickelte Eigenschaften der erfindungsgemäßen Lösung werden es dem Anwender erlauben, für das Ansehen eines Spielfilms den Broker mit irgendeiner Form eines elektronischen Zahlungsmittels zu bezahlen, wie es bereits jetzt auf dem World-Wide Web zur Verfügung steht oder z.B. die Übertragung eines Spielfilms mit Hilfe eines privaten Codes zu sichern, welcher vor der tatsächlichen Abspielung auf dem Fernsehgerät erneut eingegeben werden muß.

Für diese Ausführungsform der vorliegenden Erfindung muß die Set-Top-Box (STB) über eine geeignete Kommunikationsverbindung zu dem PC (Verbindung Nr. 4 in FIG 7) verfügen. Dies kann z.B. lokal über ein Hausnetzwerk oder über eine Verbindung mit Hilfe des Breitband-ISDN-Netzwerkes geschehen. Um die Betrachtung eines Spielfilms zu ermöglichen, überträgt der Broker eine Datei zu dem PC, welche dem sogenannten Video Access File sehr ähnelt, welche im vorhergehenden Abschnitt beschrieben wurde. Bei dieser Lösung wird die Datei jedoch nicht sofort abgespielt, sondern an die Set-Top-Box weitergeleitet. Durch Speicherung ausgewählter Video Access Files auf dem PC ist es sogar möglich, ein benutzerspezifisches lokales Verzeichnis von Spielfilmen oder anderen häufig benötigten Informationen anzulegen. In diesem Fall verhält sich der PC ähnlich wie ein lokaler Service Broker, wobei die Set-Top-Box aus einer Liste von Spielfilmen oder anderer ähnlicher Information wählen kann.

FIG 8 zeigt die grundlegenden Informationsflüsse bei der Auswahl eines Spielfilms mit Hilfe eines PC's und der anschließenden Betrachtung des Spielfilms mit Hilfe der Set-Top-Box.

In dieser Patentanmeldung wurde auf die folgenden Veröffentlichungen Bezug genommen:
[Cole95] R.G. Cole, D. Shur, IP over ATM: A Framework Document, Internet Draft (draft-ietf-atm-framework-doc-01.txt), Work in Progress, February 1995.
[Katz94] D. Katz, D. Piscitello, NBMA Next Hop Resolution Protocol (NHRP), Internet Draft (draft-ietf-rolc-nhrp-03.txt), Work in Progress, November 1994.
[Bern95] T. Berners-Lee, et.al., Hypertext Transfer Protocol - HTTP/1.0, Internet Draft (draft-ietf-http-v10-spec-00.txt), Work in Progress, March 1995.
[RFC1483] J. Heinanen, Multiprotocol Encapsulation over ATM Adaption Layer 5, Internet Request for Comments No. 1483, Telecom Finland, July 1993.
[RFC1577] M. Laubach, Classical IP and ARP over ATM, Internet Request for Comments No. 1577, Hewlett-Packard Laboratories, December 1993.
[RFC1755] M. Perez, et. al., ATM Signaling Support for IP over ATM, Internet Request for Comments No. 1755, ISI and Ascom Timeplex, February 1995.
[Chao94] H.J. Chao, et.al., IP on ATM Local Area Networks, IEEE Communications Magazine, Vol. 32, No. 8, August 1994.
[Newman94]P. Newman, ATM Local Area Networks, IEEE Comunications Magazine, Vol. 32, No. 3, March 1994.

## Patentansprüche

1. Netzwerkserver mit einer ersten Schnittstelle zu einem Computernetz (INTERNET) und einer zweiten Schnittstelle zu einem Kommunikationsnetz (B-ISDN NETWORK) und Mitteln zur Übertragung von auf dem Netzwerkserver gespeicherten, von einem Netzanwender mit Hilfe einer auf dem Computernetz laufenden Anwendung ausgewählten Daten über das Kommunikationsnetz an einen Netzteilnehmer.

2. Netzwerkserver nach Anspruch 1, der als WWW-Server im Internet arbeitet und gleichzeitig an ein digitales Breitband-Kommunikationsnetz angeschlossen ist.

3. Netzwerkserver nach Anspruch 2 mit mindenstens einer Speichereinrichtung für Daten, die über Uniform Ressource Locators des World Wide Web ausgewählt werden können.

4. Netzwerkserver nach einem der vorhergehenden Ansprüche, dessen Übertragungsprozesse auf dem Kommunikationsnetz über die Benutzeroberfläche einer auf dem Computernetz laufenden Anwendung gesteuert werden können.

5. Netzwerkserver nach Anspruch 4, dessen Prozesse zur Übertragung von Daten über das Kommunikationsnetz an ein Kommunikationsendgerät mit Hilfe von Befehlen eines Web-Clients, der auf einem an das Internet angeschlossenen Personal Computer läuft, gesteuert werden können.

6. Hypermedia-Dokument in einem Computernetz (INTERNET) mit einem Verweis auf eine Netzwerkressource, deren Auswahl mit Hilfe einer Anwendung des Computernetzes auf einem Netzwerkserver einen Prozeß zur Übertragung von Daten über ein Kommunikationsnetz (B-ISDN NETWORK) an ein Endgerät anstößt.

7. Verfahren zur Aus wahl von zu übertragenden Daten von einem Netzwerkserver über ein Kommunikationsnetz (B-ISDN NETWORK) an ein an dieses Kommunikationsnetz angeschlossenes Endgerät (CPE), bei dem die zu übertragenden Daten mit Hilfe einer Anwendung, die auf einem Computernetz (INTERNET), läuft, über das der Netzwerkserver adressierbar ist, ausgewählt werden.

8. Verfahren nach Anspruch 7, bei dem die zu übertragenden Daten mit Hilfe eines Web-Clients ausgewählt werden, der auf einem Datenverarbeitungssystem im Internet läuft, und bei dem die Daten durch Aufruf eines zugehörigen Uniform Ressource Locators ausgewählt werden und ihre Übertragung über das Kommunikationsnetz angestoßen wird.

9. Verfahren nach einem der vorhergehenden Ansprüche, bei dem die Auswahl der zu übertragenden Daten einen Prozess auf dem Netzwerkserver anstößt, durch welchen eine Verbindung zu dem Endgerät über ein Kommunikationsnetz aufgebaut wird, über welche die ausgewählten Daten übertragen werden.

10. Verfahren nach Anspruch 8, bei dem die Auswahl der zu übertragenden Daten einen Prozess auf dem Datenverarbeitungssystem anstößt, durch welchen eine Verbindung zu dem Netzwerkserver über ein Kommunikationsnetz aufgebaut wird, über welche die ausgewählten Daten übertragen werden.

11. Netzwerk mit Endgeräten und Servern, wobei das Netzwerk aus einem Computernetz (INTERNET) und einem Kommunikationsnetz (B-ISDN-NETWORK) besteht, **dadurch gekennzeichnet daß**,
- die Endgeräte und Server jeweils eine erste Schnittstelle zum Computernetz und eine zweite Schnittstelle zum Kommunikationsnetz haben, und daß
- Mittel zur Übertragung von auf einem Server gespeicherten, von einem Netzanwender mit Hilfe einer auf dem Computernetz laufenden Anwendung ausgewählten Daten über das Kommunikationsnetz an einen Netzteilnehmer vorgesehen sind.

## Claims

1. Network server having a first interface to a computer network (INTERNET), a second interface to a communications network (B-ISDN NETWORK), and means for transmitting data via the communications network to a network subscriber, said data being stored on the network server and being selected by a network user with the aid of an application running on the computer network.

2. Network server according to Claim 1, which operates as a WWW server in the Internet and is at the same time connected to a digital broadband communications network.

3. Network server according to Claim 2 with at least one memory device for data which can be selected via Uniform Resource Locators in the Worldwide Web.

4. Network server according to one of the preceding claims, whose transmission processes on the communications network can be controlled via the user interface of an application running on the computer network.

5. Network server according to Claim 4, whose processes for transmitting data via the communications network to a communications terminal can be controlled with the aid of instructions from a Web Client which is running on a personal computer connected to the Internet.

6. Hypermedia document in a computer network (INTERNET) having a cross reference to a network resource whose selection with the aid of an application of the computer network on a network server initiates a process for transmitting data via a communications network (B-ISDN NETWORK) to a terminal.

7. A method for selecting data to be transmitted from a network server via a communications network (B-ISDN NETWORK) to a terminal (CPE) connected to this communications network, in which the data to be transmitted are selected with the aid of an application which is running on a computer network (INTERNET) via which the network server can be addressed.

8. Method according to Claim 7, in which the data to be transmitted are selected with the aid of a Web Client which is running on a data processing system in the Internet, and in which the data are selected, and their transmission via the communications network is initiated, by calling an associated Uniform Resource Locator.

9. Method according to one of the preceding claims, in which the selection of the data to be transmitted initiates a process on the network server, by means of which a link is set up to the terminal via a communications network, via which link the selected data are transmitted.

10. Method according to Claim 8, in which the selection of the data to be transmitted initiates a process on the data processing system, by means of which a link is set up to the network server via a communications network, via which link the selected data are transmitted.

11. Network having terminals and servers, in which the network comprises a computer network (INTERNET) and a communications network (B-ISDN NETWORK), **characterized in that**
- the terminals and servers each have a first interface to the computer network and a second interface to the communications network, and **in that**
- means are provided for transmitting data via the communications network to a network subscriber, said data being stored on a server and being selected by a network user with the aid of an application running on the computer network.

## Revendications

1. Serveur de réseau avec une première interface avec un réseau informatique (INTERNET) et une deuxième interface avec un réseau de communication (B-ISDN NETWORK) et des moyens pour la transmission de données, mémorisées sur le serveur de réseau et sélectionnées par un utilisateur du réseau à l'aide d'une application fonctionnant sur le réseau informatique, via le réseau de communication à un abonné au réseau.

2. Serveur de réseau suivant la revendication 1, qui fonctionne sur internet en tant que serveur du www et qui est raccordé simultanément à un réseau de communication numérique large bande.

3. Serveur de réseau suivant la revendication 2 avec au moins un équipement de mémorisation pour des données, qui peuvent être sélectionnées via des uniform ressource locators du world wide web.

4. Serveur de réseau suivant l'une des revendications précédentes, dont les processus de transmission peuvent être commandés sur le réseau de communication via la surface utilisateur d'une application fonctionnant sur le réseau informatique.

5. Serveur de réseau suivant la revendication 4, dont les processus pour la transmission de données via le réseau de communication à un terminal de communication peuvent être commandés à l'aide de commandes d'un client du web, qui fonctionne sur un personal computer raccordé à internet.

6. Document hypermedia sur un réseau informatique (INTERNET) avec un renvoi à une ressource du réseau, dont la sélection déclenche un processus pour la transmission de données à un terminal via un réseau de communication (B-ISDN NETWORK) à l'aide d'une application du réseau informatique sur un serveur de réseau.

7. Procédé pour la sélection de données à transmettre d'un serveur de réseau via un réseau de communication (B-ISDN NETWORK) à un terminal (CPE) raccordé à ce réseau de communication, pour lequel les données à transmettre sont sélectionnées à l'aide d'une application qui fonctionne sur un réseau informatique (INTERNET) qui peut être adressé via le serveur de réseau.

8. Procédé suivant la revendication 7, pour lequel les données à transmettre sont sélectionnées à l'aide d'un client du web, qui fonctionne sur un système de traitement de données sur internet et pour lequel des données sont sélectionnés en appelant un uniforme ressource locator correspondant, et leur transmission est déclenchée via le réseau de communication.

9. Procédé suivant l'une des revendications précédentes, pour lequel la sélection des données à transmettre déclenche un processus sur le serveur de réseau, par lequel une connexion au terminal est construite via un réseau de communication, par l'intermédiaire duquel les données sélectionnées sont transmises.

10. Procédé suivant la revendication 8, pour lequel la sélection des données à transmettre déclenche un processus sur le système de traitement de données, par lequel une connexion au serveur de réseau est construite via un réseau de communication, par l'intermédiaire duquel les données sélectionnées sont transmises.

11. Réseau ayant des terminaux et des serveurs, le réseau se composant d'un réseau informatique (INTERNET) et d'un réseau de communication (B-ISDN NETWORK), **caractérisé en ce que**,
- les terminaux et les serveurs ont respectivement une première interface avec le réseau informatique et une deuxième interface avec le réseau de communication, et **en ce que**
- des moyens sont prévus pour la transmission de données, mémorisées sur un serveur et sélectionnées par un utilisateur du réseau à l'aide d'une application fonctionnant sur le réseau informatique, à un abonné au réseau via le réseau de communication.
